# EUROPEAN PATENT APPLICATION

(11) **EP 2 983 016 A1**
(43) Date of publication of application: **10.02.2016**
(21) Application number: 13881205.2
(22) Date of filing: 01.04.2013
(51) Int. Cl.: G02B 3/00, B29C 65/00

(54) **METHOD FOR MANUFACTURING DECORATIVE LENSES**

(71) Applicant: HOYA CORPORATION, Tokyo 161-0032 (JP)
(72) Inventor: HASHIMOTO, Toshikazu, Tokyo 161-8525 (JP)
(74) Representative: Beckmann, Claus
(86) International application number: PCT/JP2013/002243
(87) International publication number: WO 2014/162336

(57) **Abstract**

A purpose is to provide a method for producing a decorative lens capable of effectively suppressing deformation of the lens in laminating a film material to the lens even when lenses vary widely in shape, in which support jigs or the like for suppressing deformation of lenses need not be provided for respective lenses having different shapes. A first compartment 31 and a second compartment 32 are separated hermetically by a film material 13, the second compartment 32 and a third compartment 33 are hermetically separated by an elastic film 4, the pressure inside the first compartment 31 is made higher than the pressure inside the second compartment 32, and in laminating the film material 13 is to a lens 11 disposed inside the second compartment 32, the pressure inside the third compartment 33 is made higher than the pressure inside the second compartment 32, so that the lens 11 is supported by the elastic film 4.

## Description

### Technical Field

The present invention relates to a method for producing a decorative lens.

### Background Art

Decorative lenses (also called functional lenses) with film materials having various functions, such as a polarizing function, a photochromic function, and an antireflection function, laminated thereto have been widely used for spectacle lenses.

Patent Literature 1, for example, discloses a polarizing lens having a plastic lens and a polarizing film formed on a surface of the lens. Patent Literature 1 also discloses a method of laminating a polarizing film curved according to the curvature of a lens surface through vacuum forming, pressure forming, press forming, or the like, to a lens. According to Patent Literature 1, in such a method, curving of the polarizing film is performed using the lens to which the polarizing film is laminated as a mold for curving the polarizing film after adhesive or the like is laminated to the film and the lens, which allows the curving and the adhesion to be performed together at the same time.

In addition, technologies for laminating synthetic resin sheeting, films, or the like on various substrates by means of vacuum forming for the purpose of surface decoration, functionalization, and the like have been known.

Patent Literature 2, for example, discloses a method for producing a laminate, in which synthetic resin sheeting and a substrate are placed in a vacuum chamber at positions opposed to each other, and the synthetic resin sheeting that is heated is laminated onto the substrate owing to the pressure difference between atmospheric pressure and vacuum.

Patent Literature 3 discloses a vacuum forming device for vacuum forming of a subject between two or more molds, in which a preset amount of gas is introduced into a required mold according to the amount of deformation of the subject that is softened by heating, and the deformation of the subject is corrected by the differential pressure between the molds.

Furthermore, Patent Literature 4 discloses a film laminating method characterized in that a cut film is placed above a substrate in such a manner that a central part of the cut film, when brought into in a reduced-pressure atmosphere, will expand downward, the cut film is thereafter brought into the reduced-pressure atmosphere, and subsequently, the film is pressed against the substrate outward from the central part.

Furthermore, Patent Literature 5 discloses a method for coating a hollow core under reduced pressure characterized in that the hollow core is provided with a through-hole for bringing the inside of the hollow core into a reduced-pressure state when the inside of a chamber box is brought into a reduced-pressure state, and increasing the pressure inside the hollow core when the pressure in the chamber box is increased.

### Citation List

### Patent Literatures

Patent Literature 1: JP H09-258009 A
Patent Literature 2: JP S56-45768 B
Patent Literature 3: JP 2002-67137 A
Patent Literature 4: JP 2003-300255 A
Patent Literature 5: JP 2006-7422 A

### Summary of Invention

### Technical Problem

Here, an example of examination of a method for producing a decorative lens having a film material such as a polarizing film laminated to a surface thereof, which had been examined by the inventor before the present invention is achieved, will be described with reference to the drawings.

### [Examination Example]

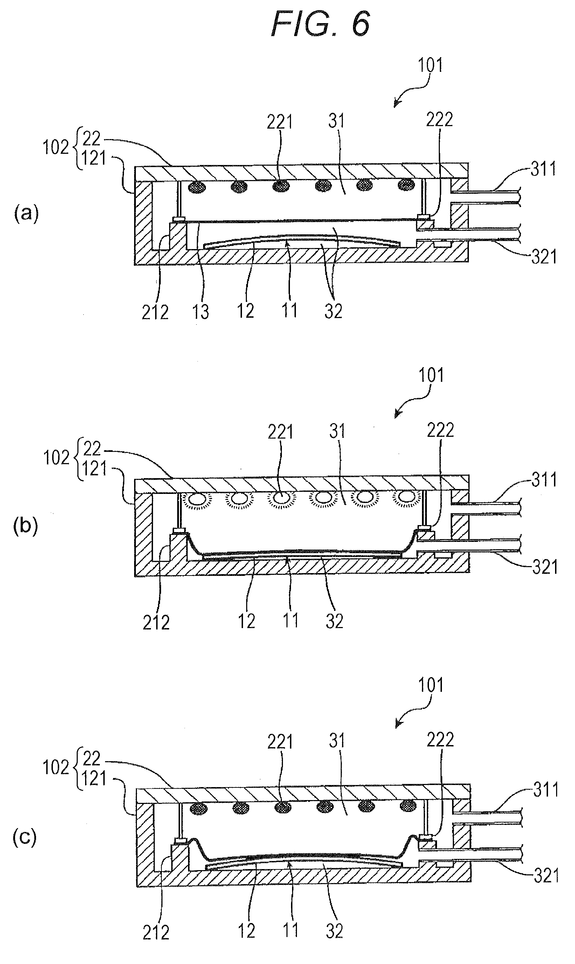

Fig. 6 illustrates explanatory drawings for explaining the present examination example, which is carried out with use of a film laminating device 101.

The film laminating device 101 illustrated in Fig. 6 includes a hermetic container 102, which has a container body 121 and a lid 22. The container body 121 has a side plate to which a pipe 311 is connected, and is provided with a partition 212 which is formed upright to hermetically surround on a central area of a bottom plate of the container body 121 and to which a pipe 321 is connected. Although not illustrated, the pipes 311 and 321 are also connected to differential pressure generating devices (vacuum generating devices, or the like) via valves and the like. The lid 22 has aheater221 forsofteninga filmmaterial 13 such as a polarizing film, and a holding member 222 for holding the film material 13.

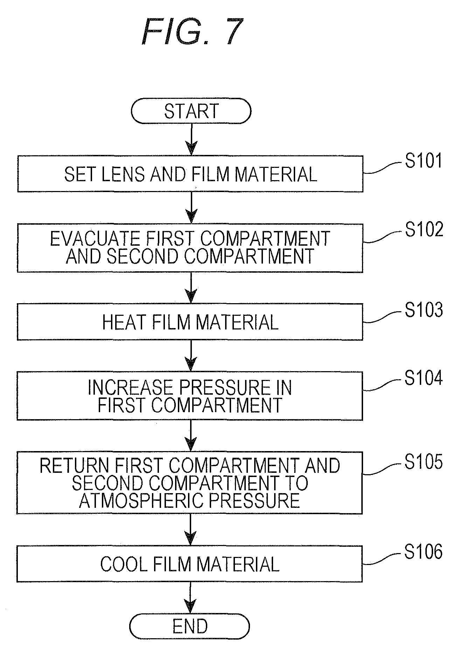

In the present examination example in which the above-described film laminating device 101 is used, respective steps (S101 to S106) illustrated in a flowchart of Fig. 7 are performed sequentially, for example.

In S101, a lens 11 and the film material 13 are set. Specifically, the lid 22 is first opened, and the lens 11 is positioned at the center of the bottom plate of the container body 121. Subsequently, the film material 13 is placed on an upper surface of the partition 212, and the lid 22 is then closed (see Fig. 6(a)). As a result, a first compartment 31 and a second compartment 32 provided adjacent to each other are hermetically separated from each other by the film material 13.

The surface of the lens 11 opposite to the surface to which the film material 13 is to be laminated is typically a concave surface 12, but the lens 11 is not deformed when the pressure in the first compartment 31 and the pressure in the second compartment 32 are equal.

In S102, the first compartment 31 and the second compartment 32 are evacuated, and kept in vacuum.

In S103, the film material 13 is heated. Specifically, the heater 221 is turned on, and the film material 13 is heated in vacuum to be softened.

In S104, the pressure in the first compartment 31 is increased, so that the pressure in the first compartment 31 becomes higher than that in the second compartment 32. As a result, the softened film material 13 is laminated to the surface of the lens 11 while expanding.

In this process, as illustrated in Fig. 6(b), when the pressure in the first compartment 31 is increased to be higher than the pressure in the second compartment 32, the expanding film material 13 may press the lens 11 owing to the difference in pressure between the first compartment 31 and the second compartment 32, the lens 11 may undergo elastic deformation in such a manner as to be squashed, and the film material 13 may be laminated to the surface of the elastically-deformed lens 11.

In S105, the pressures in the first compartment 31 and the second compartment 32 are returned to atmospheric pressure, and the heater 221 is turned off.

In this process, as illustrated in Fig. 6(c), when the pressures in the first compartment 31 and the second compartment 32 are returned to atmospheric pressure, the lens 11 returns to the shape before the elastic deformation, but the film material 13, which is already shaped according to the lens 11 in the elastically-deformed state, cannot follow the returning to the original shape and may come off in the periphery of the lens 11, resulting in laminating defect.

In S106, the film material 13 is cooled, and subsequently, the lens 11 to which the film material 13 is laminated is taken out from the container 102.

In a case where the laminating defect occurs in S105, it is conceivable that a support jig (not illustrated) having a convex surface that is substantially entirely in contact with the concave surface 12 of the lens 11 may first be placed at the center of the bottom plate of the container body 121 in S101, and the lens 11 may then disposed on the support jig. In this manner, the convex surface of the support jig is in contact with the concave surface 12 of the lens 11 and supports the lens 11 at the concave surface 12, which can suppress deformation (elastic deformation and plastic deformation) of the lens 11 and prevent laminating defect.

The method of using the support jig as described above to suppress deformation of lenses is an inexpensive and easy method for manufacturing similar products in large quantities; however, for spectacle lenses that are required to meet the needs for small-lot production, single-piece production, custom order production, and the like, various shapes of concave surfaces are used because lenses have a wide range of powers. For dealing with various shapes of concave surfaces, a wide variety of support jigs need to be made, which poses a problem of requiring high cost.

Furthermore, a support jig matching the shape of the concave surface of the lens needs to be conveyed from a storage location and attached to the device each time the product type is switched, and the support jig needs to be removed from the device and conveyed again to the storage location after production, which also poses problems of requiring much time for these process and being disadvantageous in productivity and economy.

In view of the above, the present inventors have focused on the fact that, in laminating of the film material 13, the expanding film material 13 presses the lens 11 and the lens 11 undergoes elastic deformation owing to the difference in pressure between the inside of the first compartment 31 and the inside of the second compartment 32 that are hermetically separated by the film material 13, have pursued intense study in terms of eliminating the needs for a wide variety of support jigs by preventing elastic deformation of lenses 11 even when such pressure difference is caused, and have achieved the present invention.

A purpose of the present invention is thus to provide a method for producing a decorative lens capable of effectively suppress deformation of the lens even when lenses vary widely in shape in producing a decorative lens by laminating a film material to a lens, in which support jigs or the like for suppressing deformation of lenses need not be provided for respective lenses having different shapes.

### Solution to Problem

According to the present invention, there is provided a method for producing a decorative lens laminating a film material to a lens, the film material being a laminated material, the method including: hermetically separating a first compartment and a second compartment provided adjacent to each other from each other by the film material; hermetically separating the second compartment and a third compartment provided adjacent to each other f romeach other by an elastic film; setting a pressure in the first compartment higher than a pressure in the second compartment, and in laminating the film material to the lens disposed in the second compartment, setting a pressure in the third compartment higher than the pressure in the second compartment to support the lens by the elastic film.

### Advantageous Effects of Invention

According to the present invention, deformation of a lens can be effectively suppressed in laminating a film material to the lens even when lenses vary widely in shape, and a decorative lens with a film material with good adhesion to the lens can be produced.

### Brief Description of Drawings

Fig. 1 is an explanatory drawing illustrating an example of a film laminating device.
Fig. 2 is a flowchart illustrating respective steps of an embodiment of a method for producing decorative lenses according to the present invention.
Fig. 3 illustrates cross-sectional views for explaining the respective steps in Fig. 2.
Fig. 4 is an explanatory drawing illustrating a modified example of the film laminating device.
Fig. 5 illustrates cross-sectional views for explaining respective steps in the modified example of the embodiment of the method for producing a decorative lens according to the present invention.
Fig. 6 illustrates explanatory drawings for explaining an examination example.
Fig. 7 is a flowchart illustrating respective steps in the examination example.

### Description of Embodiments

Hereinafter, an embodiment of the present invention will be described with reference to the drawings.

### [Film laminating device]

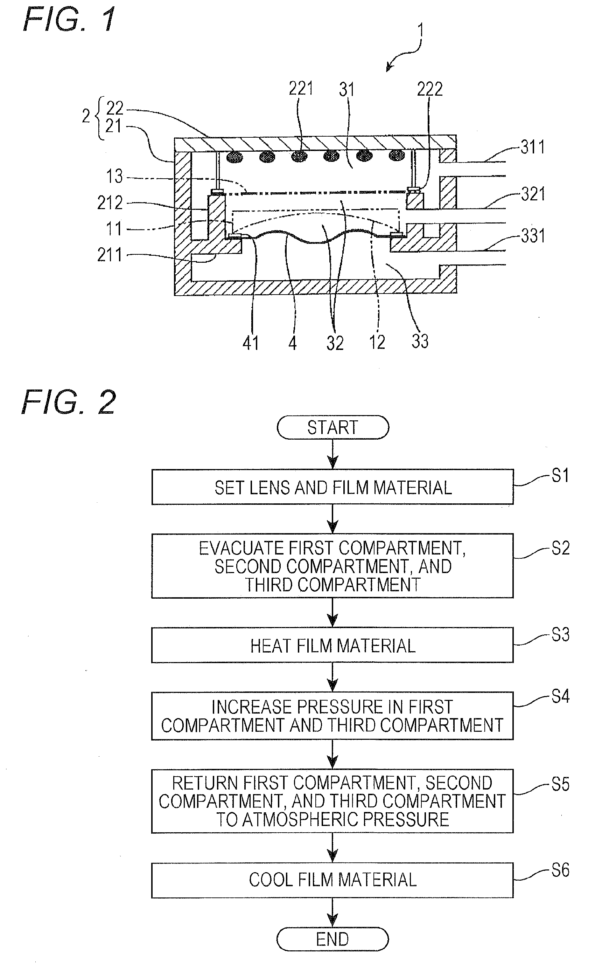

Fig. 1 is an explanatory drawing illustrating an example of a film laminating device, and a method for producing a decorative lens according to the present embodiment can be carried out with suitable use of such a film laminating device 1.

The film laminating device 1 illustrated in Fig. 1 includes a hermetic container 2, which has a container body 21 and a lid 22. The container 2 also has a structure in which a first compartment 31 and a second compartment 32 provided adjacent to each other are hermetically separated from each other by a film material 13, and the second compartment 32 and a third compartment 33 provided adjacent to each other are hermetically separated from each other by an elastic film 4.

Specifically, the container body 21 has substantially a box shape with side plates and a bottom plate, in which a partition board 211 having an opening formed at the center is provided at a position lower than the midpoint in the height direction of the side plates. In addition, a cylindrical partition 212 is formed upright on an upper surface of the partition board 211 at a distance from an inner edge of the opening.

The elastic film 4 is fixed to inner edge portions of the partition board 211 in such a manner as to cover the opening formed at the center of the partition board 211, and the film material 13 is attached to the upper surface of the partition 212. In addition, a lens 11 is disposed at a position over the elastic film 4 inside the second compartment 32 surrounded by a peripheral edge of the opening of the partition board 211 and the partition 212.

Furthermore, a pipe 311 communicating with the first compartment 31 is connected to an upper portion of a side plate of the container body 21, and a pipe 331 communicating with the third compartment 33 is connected to a lower portion of the side plate. In addition, a pipe 321 communicating with the second compartment 32 is connected to the partition 212 in a state in which the pipe 321 penetrates through the side plate of the container body 21. These pipes 311, 321, and 331 are connected to differential pressure generating devices (vacuum generating devices, or the like) via valves and the like, which are not illustrated. This allows the pressures in the first compartment 31, the second compartment 32, and the third compartment 33 to be controlled.

Furthermore, the lid 22 has a heater 221 for heating and softening the film material 13, and a holding member 222 for holding the film material 13 placed on the upper surface of the partition 212. The holding member 222 is an annular flat plate connected to the lid 22 and supported by arms suspending vertically from a lower surface of the lid 22. When the lid 22 is closed in a state in which the film material 13 is placed on the upper surface of the partition 212, the holding member 222 presses the edge of the film material 13 to hold the film material 13 on the upper surface of the partition 212.

Note that the structure of the container 2 maybe any structure in which the first compartment 31, the second compartment 32, and the third compartment 33 are formed and in which the film material 13 and the elastic film 4 can be held, and is not limited to that described above. For example, various structures in which the first compartment 31, the second compartment 32, and the third compartment 33 can be formed may be used instead of the partition board 211 and the partition 212, for example. The holding member 222 may alternatively have a structure in which the holding member 222 is locked by the partition 212 to hold the film material 13. Furthermore, a structure in which a plurality of lenses 11 can be disposed in the container 2 may be used.

### [Elastic Film]

The elastic film 4 has functions of hermetically separating the second compartment 32 and the third compartment 33 provided adjacent to each other from each other, and being elastically deformed owing to the difference in pressure between the inside of the second compartment 32 and the inside of the third compartment 33 to support the lens 11. The elastic film 4 is elastically deformed according to the shape of the concave surface 12 of the lens 11 even when concave surfaces 12 of lenses 11 vary in shape, and presses substantially the entire concave surface 12 upward from below to support the lens 11.

The elastic film 4 of the present embodiment has a substantially circular shape with concentric slack, and is fixed near the opening of the partition board 211 by a fixing member 41 in such a manner as to cover the opening of the partition board 211. The fixingmember 41 is an annular flat plate attached to the partition board 211 so that the elastic film 4 is sandwiched between the fixing member 41 and the partition board 211. Examples of the material for the elastic film 4 typically include chloroprene rubber, ethylene-propylene rubber, and fluorine resin.

Note that the shape of the elastic film 4 may be any shape that can achieve the functions described above, and is not particularly limited. For example, although not illustrated, the elastic film 4 may have a shape with partially different thicknesses or with irregularities.

### [Decorative Lens]

The decorative lens is obtained by laminating the film material 13 that is a laminated material to the lens 11. The surface of the lens 11 of the present embodiment opposite to the surface to which the film material 13 is to be laminated is the concave surface 12. The lens 11 is disposed in the second compartment 32 in a state in which the peripheral edge of the lens 11 is placed on the fixing member 41 that fixes the elastic film 4 in such a manner that the concave surface 12 faces the elastic film 4.

Furthermore, a decorative film is used for the film material 13. The decorative film is typically a synthetic resin film having at least one functionality selected from a function with protection against photodegradation or photooxidation, a shock absorbing function, an abrasion resistance function, an antireflection function, a polarizing function, a color filter function, a photochromic function, an antistatic function, a contamination prevention function, and a function applied by pixels or a microstructure.

Alternatively, the film material 13 may be adhered to the lens 11 with an adhesive or a sticking agent where necessary.

The adhesive or a sticking agent for laminating the film material 13 to the lens 11 is not particularly limited as long as the adhesive or the sticking agent does not affect the functions of the lens 11. When the lens 11 is a plastic lens, for example, an adhesive or a sticking agent of a reaction type, an aqueous dispersion type (latex emulsion type), a hot-melt type, or a pressure sensitive type, which contains no organic solvent that may dissolve the lens surface and impair the optical functions of the lens is preferably used, and an acrylic resin based, epoxy resin based, urethane resin based, ethylene-vinyl acetate resin based, cyanoacrylate based, vinyl chloride resin based, styrene-butadiene rubber based, or chloroprene rubber based adhesive or sticking agent can be used.

### [Method for Producing Decorative Lens]

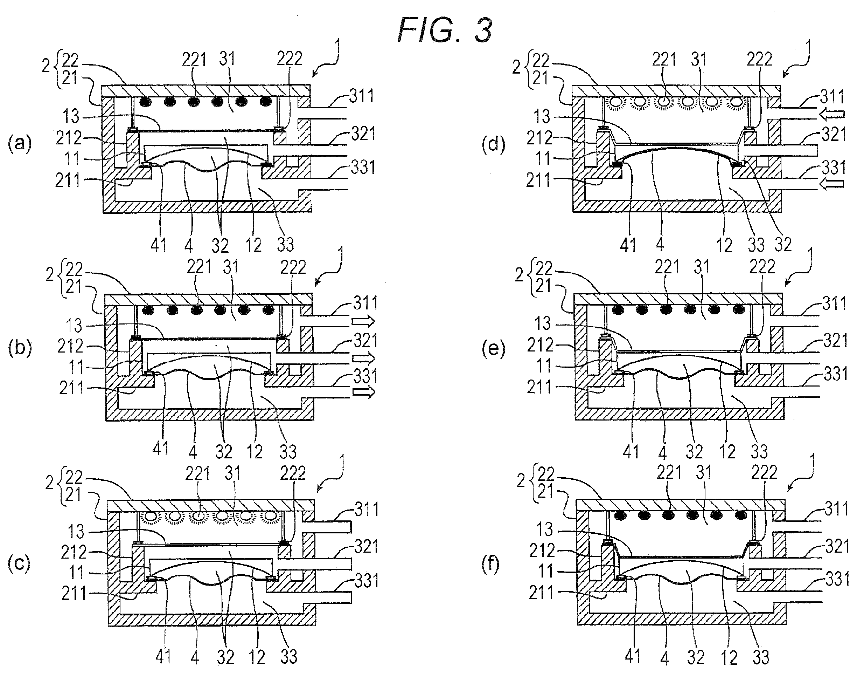

In the method for producing a decorative lens according to the present embodiment using the film laminating device 1 as described above, respective steps (S1 to S6) illustrated in a flowchart of Fig. 2, for example, are sequentially performed. Fig. 3 illustrates cross-sectional views for explaining the respective steps in Fig. 2.

In S1, the lens 11 and the film material 13 are set. Specifically, the lid 22 is first opened, and the peripheral edge of the lens 11 is placed on the fixing member 41, so that the lens 11 is disposed in the second compartment 32 of the container body 21. Subsequently, the film material 13 is placed on the upper surface of the partition 212, and the lid 22 is then closed (see Fig. 3(a)). As a result, the first compartment 31 and the second compartment 32 provided adjacent to each other are hermetically separated from each other by the film material 13 held on the upper surface of the partition 212.

Note that the second compartment 32 and the third compartment 33 provided adjacent to each other is hermetically separated from each other in advance by the elastic film 4 as described above. Furthermore, the first compartment 31, the second compartment 32, and the third compartment 33 communicate with the atmosphere via the pipes 311, 321, and 331, and the pressures inside thereof are atmospheric pressure.

In S2, the first compartment 31, the second compartment 32, and the third compartment 33 are evacuated through the pipes 311, 321, and 331 by the differential pressure generating devices (not illustrated) (see Fig. 3(b)).

Note that the first compartment 31, the second compartment 32, and the third compartment 33 are evacuated at substantially the same time and at substantially the same pressure.

In S3, the film material 13 is heated (see Fig. 3(c)). Specifically, the heater 221 is turned on, and the film material 13 is heated in vacuum and softened. In Fig. 3, the filmmaterial 13 that is hardened is represented by a thick line while the film material 13 that is softened is represented by an outlined thick line.

Note that, depending on the type or the like of the film material 13, the film material 13 may be deformed to expand at room temperature owing to the difference in pressure between the inside of the first compartment 31 and the inside of the second compartment 32. For such a film material 13, the heater 221 may not be used.

In S4, air is supplied to the first compartment 31 and the third compartment 33 via the pipes 311 and 331 through opening to the atmosphere or the like, so that the internal pressures are increased at substantially the same time and at substantially the same pressure (see Fig. 3(d)). In this process, the pressure in the first compartment 31 is increased to be higher than the pressure in the second compartment 32, so that the softened film material 13 is laminated to the surface of the lens 11 disposed in the second compartment 32 while expanding. In addition, the pressure in the third compartment 33 is increased to be higher than that in the second compartment 32, so that the elastically deformed elastic film 4 contacts with and presses the concave surface 12 of the lens 11 to support the lens 11.

In this manner, in laminating of the film material 13 to the lens 11, the lens 11 is pressed by the film material 13 from above and pressed by the elastic film 4 from below. Since the pressing forces are substantially cancelled out at this point, deformation (elastic deformation and plastic deformation) of the lens 11 can be suppressed, and the lens 11 with the film material 13 adhered thereto can be produced.

Furthermore, even when lenses 11 vary widely in shape, the elastic film 4 is elastically deformed according to the shape of each lens 11, which can effectively suppress deformation of lenses 11 having a wide variety of shapes and produce the lens 11 with the film material 13 with good adhesion to the lens 11.

Consequently, it is not necessary to support jigs of a variety of shapes as in the examination example described above, and the labor and the cost therefor become unnecessary. Furthermore, since it is not necessary to reset a support jig each time the production type is switched, the time required for switching the product type can be significantly shortened, allowing improvement in economy and productivity.

While the pressures in the first compartment 31 and the third compartment 33 are increased substantially to the atmospheric pressure in the present embodiment, the pressures are not limited thereto. The pressure in the first compartment 31 may be any pressure higher than that in the second compartment 32, and the pressure in the first compartment 31 may be lower or higher than the atmospheric pressure, for example.

Furthermore, when the film material 13 is to be laminated to the lens 11, it is preferable that the pressures in the first compartment 31 and the third compartment 33 to be increased be set equal to each other. In this manner, since the pressing force of the film material 13 toward the lens 11 and the pressing force of the elastic film 4 toward the lens 11 are cancelled out at a higher level, which allows deformation of the lens 11 to be more effectively suppressed.

In S5, the pressures in the first compartment 31, the second compartment 32, and the third compartment 33 are returned to atmospheric pressure through opening to the atmosphere, and the heater 221 is turned off (see Fig. 3(e)).

In S6, the film material 13 is cooled to be hardened (see Fig. 3(f)), and subsequently, the lens 11 to which the film material 13 is laminated is taken out from the container 2.

As described above, according to the present embodiment, since the elastic film 4 flexibly matches various shapes of lenses 11 and effectively suppress deformation of the lenses 11 even when the lenses 11 vary widely in shape in laminating of the filmmaterial 13 to the lens 11, the lens 11 with the film material 13 with good adhesion to the lens 11 can be produced. Consequently, it is not necessary to make support jigs of a variety of shapes, and furthermore, the time required for switching the product type such as setting a support jig can be significantly shortened, allowing improvement in economy and productivity.

Furthermore, various modifications can be made to the present embodiment, and a modified example of the present embodiment will be described next with reference to the drawings.

### [Modified Example]

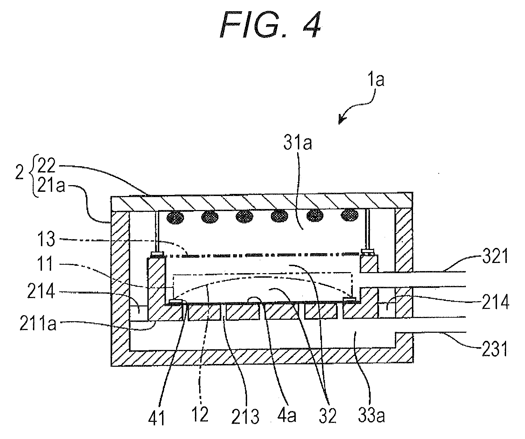

Fig. 4 is an explanatory drawing illustrating the modified example of the film laminating device, and a method for producing a decorative lens according to the present modified example can be carried out with suitable use of such a film laminating device 1a.

The film laminating device 1a illustrated in Fig. 4 is different from the film laminating device 1 of the embodiment described above in that a first compartment 31a and a third compartment 33a communicate with each other, and the other components of the film laminating device 1a are substantially the same as those described above. The components in Fig. 4 that are the same as those in Fig. 1 will be designated by the same reference numerals and detailed description thereof will not be repeated.

Specifically, the film laminating device 1a is provided with a plate-like partition board 211a at a position lower than the midpoint in the height direction of the side plates of the container body 21a. A plurality of through-holes 213 is formed at the central part of the partition board 211a, and a plurality of openings 214 is formed at an edge portion thereof. These openings 214 allows the first compartment 31a and the third compartment 33a to communicate with each other, and both the pressures in the first compartment 31a and the third compartment 33a can be controlled via the pipe 331 communicating with the third compartment 33. Thus, in this configuration, the pipe 311 communicating with the first compartment 31 in the film laminating device 1 in the embodiment described above is not provided.

In this manner, the pressure in the first compartment 31a and the pressure in the third compartment 33a become automatically equal to each other, and the pressing force of the film material 13 toward the lens 11 and the pressing force of the elastic film 4 toward the lens 11 are cancelled out at a higher level in laminating of the film material 13 to the lens 11, which enables to avoid deformation of the lens 11 more effectively and reliably. Furthermore, pipes, valves, and the like (not illustrated) for controlling the pressures need not be provided, which can simplify the structure.

Furthermore, since the elastic film 4a has a substantially circular shape with no slack and the central part of the elastic film 4a is supported by the partition board 211a while the film laminating device 1a is stopped or in like states, deformation over time can be suppressed and the durability or the like can be improved.

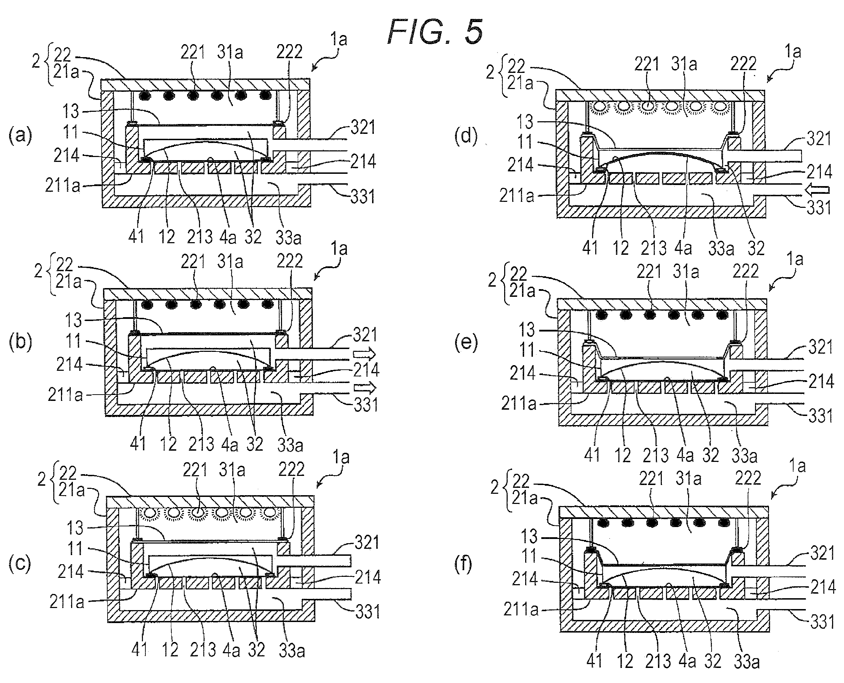

In the method for producing a decorative lens using the film laminating device 1a as described above according to the present modified example, the respective steps (S1 to S6) illustrated in the flowchart of Fig. 2 described above are performed sequentially, for example. Fig. 5 illustrates cross-sectional views for explaining the steps according to the modified example of the embodiment of the method for producing a decorative lens according to the present invention.

Among the steps, for those which are substantially the same as those in the embodiment described above, the detailed description thereof will not be repeated.

In S1, the lens 11 and the film material 13 are set in substantially the same manner as the embodiment described above (see Fig. 5(a)).

In S2, the first compartment 31a, the second compartment 32, and the third compartment 33a are evacuated through the pipes 321 and 331 by the differential pressure generating devices (see Fig. 5(b)). Since the first compartment 31a and the third compartment 33a communicate with each other through the openings 214, the first compartment 31a and the third compartment 33a are evacuated through the pipe 331.

In S3, the heater 221 is turned on, and the film material 13 is heated in vacuum and softened (see Fig. 5(c)).

In S4, air is supplied to the first compartment 31a and the third compartment 33a via the pipe 331 through opening to the atmosphere or the like, so that the internal pressures are increased at the same time and to the same pressure (see Fig. 5(d)). In this process, since the first compartment 31a and the third compartment 33a communicate with each other through the openings 214, the pressure in the first compartment 31a and the pressure in the third compartment 33a become automatically equal to each other, and deformation of the lens 11 in laminating of the film material 13 to the lens 11 can be more effectively and reliably avoided, and the reliability on product quality can be improved.

In S5, the pressures in the first compartment 31a, the second compartment 32, and the third compartment 33a are returned to atmospheric pressure through opening to the atmosphere, and the heater 221 is turned off (see Fig. 5(e)).

In S6, the film material 13 is cooled to be hardened (see Fig. 5 (f)), and subsequently, the lens 11 which is laminated on the film material 13 is taken out from the container 2.

As described above, the method for producing a decorative lens according to the present modified example produces substantially the same effects as those in the embodiment described above, deformation of the lens 11 in laminating of the film material 13 to the lens 11 can be avoidedmore effectively and reliably, and the structure of the film laminating device 1a can be simplified.

While the present invention has been described above in terms of preferred embodiments, it is to be understood that the present invention is not limited to the above-described embodiments but various modifications can be made within the scope of the present invention.

### Reference Signs List

- 1: Film laminating device
- 4: Elastic film
- 11: Lens
- 13: Film material
- 31: First compartment
- 32: Second compartment
- 33: Third compartment

## Claims

1. A method for producing a decorative lens laminating a film material to a lens, the film material being a laminated material, the method comprising:
hermetically separating a first compartment and a second compartment provided adjacent to each other from each other by the film material;
hermetically separating the second compartment and a third compartment provided adjacent to each other from each other by an elastic film;
setting a pressure in the first compartment higher than a pressure in the second compartment, and in laminating the film material to the lens disposed in the second compartment, setting a pressure in the third compartment higher than the pressure in the second compartment to support the lens by the elastic film.

2. The method for producing a decorative lens according to claim 1, wherein in laminating the film material to the lens, the pressure in the first compartment and the pressure in the third compartment are set equal to each other.

3. The method for producing a decorative lens according to claim 1 or 2, wherein the first compartment and the third compartment communicate with each other.

4. The method for producing a decorative lens according to any one of claims 1 to 3, wherein the film material is adhered to the lens with an adhesive or a sticking agent.

5. The method for producing a decorative lens according to any one of claims 1 to 4, wherein a surface of the lens opposite to a surface to which the film material is to be laminated is a concave surface, and the lens is disposed in the second compartment in such a manner that the concave surface faces the elastic film.
